# EUROPÄISCHE PATENTSCHRIFT

(11) **EP 1 465 330 B1**
(45) Veröffentlichungstag und Bekanntmachung des Hinweises auf die Patenterteilung: **27.02.2013**
(21) Anmeldenummer: 04006569.0
(22) Anmeldetag: 18.03.2004
(51) Int. Cl.: H02M 7/217, H02M 1/12

(54) **Verfahren und Schaltung zum Variieren der Leistungsaufnahme von kapazitiven Lasten**
Method and circuit for varying the power consumption of capacitive loads
Procédé et circuit pour varier la consommation de puissance de charges capacitives

(30) Priorität: 04.04.2003 DE 10315474
(43) Veröffentlichungstag der Anmeldung: 06.10.2004
(73) Patentinhaber: OSRAM GmbH, 81543 München (DE)
(72) Erfinder: Fischer, Klaus, 86316 Friedberg (DE); Kreittmayr, Josef, 86399 Bobingen (DE)
(74) Vertreter: Raiser, Franz

(56) Entgegenhaltungen:
- EP-A2- 1 467 474
- WO-A1-99/17591
- US-A1- 2002 017 877

## Beschreibung

### Technisches Gebiet

Die Erfindung betrifft ein Verfahren und eine Steuerschaltung zum Variieren der Leistungsaufnahme von kapazitiven Lasten, die am Wechselspannungsnetz durch mit der Netzfrequenz erfolgendes Ein- und Ausschalten der Netzversorgung in jeder Netzhalbwelle betrieben werden, und insbesondere ein Vorschaltgerät für eine Lampe.

### Stand der Technik

Lampen wie Entladungslampen, insbesondere Kompakt-Leuchtstofflampen (CFL), werden in der Regel über eine Gleichrichterschaltung zur Gleichrichtung einer Wechselspannungsversorgung und Aufladung eines häufig als Glättungskondensator bezeichneten Kondensators am Netz betrieben. Der hierin verwendete Begriff Lampe bezieht sich insbesondere auf die genannten Kompaktleuchtstofflampen, jedoch sollen darunter auch andere Lampen wie Halogenlampen verstanden werden. Die am Kondensator anliegende Gleichspannung dient zur Versorgung eines Wechselrichters bzw. Inverters (im Folgenden Inverter), der die Kompakt-Leuchtstofflampe betreibt. Die Erfindung betrifft allgemein die Variierung der Leistungsaufnahme kapazitiver Lasten, wobei der Begriff "kapazitiv" im Fall der Lampenschaltungen den sogenannten Glättungskondensator am Eingang des Inverters meint.

### Darstellung der Erfindung

Ziel der hier vorliegenden Erfindung ist es, ein verbessertes Verfahren sowie eine verbesserte Steuerschaltung zum Variieren der Leistungsaufnahme kapazitiver Lasten anzugeben.

Erfindungsgemäß ist hierzu ein Verfahren zum Variieren der Leistungsaufnahme von Lasten mit kapazitivem Eingang an einem Wechselspannungsnetz durch ein mit der Netzfrequenz erfolgendes Ein- und Ausschalten in jeder Netzhalbwelle der Netzversorgung vorgesehen, das dadurch gekennzeichnet ist, dass solange die Netzversorgung ausgeschaltet ist, ein die Lasteingänge überbrückender Strompfad freigeschaltet wird, und dass bei eingeschalteter Netzversorgung über einen Konverter ein Glättungskondensator geladen wird, bis die Spannung am Glättungskondensator der Last einen vorgegebenen Maximalwert erreicht. Als Konverter werden im folgenden Einrichtungen verstanden, die geeignet sind, eine Eingangsspannung in eine Ausgangsspannung mit einem anderen zeitlichen Verlauf umzuwandeln. Insbesondere können dies Tiefsetzsteller oder Inverswandler oder Hochsetzsteller sein.

Insbesondere richtet sich die Erfindung auf eine Schaltung zur Durchführung des genannten Verfahrens sowie auf ein elektronisches Vorschaltgerät für eine Kompaktleuchtstofflampe mit einer solchen Schaltung zum Betrieb an einem Phasenanschnittsdimmer.

Die Erfinder sind von der Erkenntnis ausgegangen, dass die Möglichkeiten des Dimmens bzw. der Leistungsregulierung bei kapazitiven Lasten verbesserungswürdig sind. Kapazitive Lasten wie Kompakt-Leuchtstofflampen neigen bei einer nicht konstanten Netzversorgung, wie zum Beispiel beim Dimmen, zu Instabilitäten, die sich beim Betrieb von Lampen als störende Flackererscheinungen zeigen.

Zwar wurden in der Vergangenheit verschiedene Pumpschaltungen (bekannt als Schaltungen zur Reduzierung der Netzstromoberschwingungen) verwendet, die längere Stromflusswinkel, d. h. eine verstetigte Stromaufnahme und damit bessere Dimmeigenschaften ermöglichen. Solche Pumpschaltungen erfordern jedoch einen hohen Bauteilaufwand. Nachteilig ist, dass die bekannten Pumpschaltungen so ausgelegt sein müssen, dass beim Betrieb der Lampen ohne Dimmer die auftretenden Netzstromoberschwingungen die geltenden Grenzwerte nicht übersteigen. Zudem hängt die Pumpleistung solcher Pumpschaltungen von der momentanen Spannung des Gleichrichterspannungszwischenkreises ab, wodurch sich Unsymmetrien des Dimmers zwischen aufeinander folgenden Netzhalbwellen ergeben, die zu Flackererscheinungen in der betriebenen Lampe führen. Auch ist nicht gewährleistet, dass die angesprochene Pumpleistung immer hinreichend groß ist und der Glättungskondensator beim Betrieb am Dimmer nicht beim Einschalten des Leistungsschalters des Dimmers (Triac) schlagartig mit hohen Spitzenstromwerten nachgeladen wird, was letztlich negative Auswirkungen auf die Lebensdauer der Lampe haben kann.

Der Grundgedanke der Erfindung besteht darin, die erwähnten Instabilitäten und Einflüsse zu beseitigen. Hierzu schaltet das erfindungsgemäße Verfahren, das insbesondere auf den Betrieb kapazitiver Lasten an Phasenanschnittsdimmern gerichtet ist, in einer ersten Phase, in der die Netzversorgung ausgeschaltet ist, einen Strompfad frei, der die Eingänge der Last überbrückt. Mit "Überbrücken" bzw. "Kurzschließen" ist gemeint, dass eine Überbrückung zumindest für niederfrequente Eingangsspannungen erfolgt. Niederfrequent bedeutet, dass bei einer solchen Frequenz der Eingangsspannung der induktive Widerstand im Konverter (Drossel) vernachlässigbar klein gegenüber dem im Dimmer eingestellten Zeitwiderstand sein muss. Durch diesen niederohmigen Strompfad kann dann z. B. das Zeitglied des Leistungsschalters in einem Dimmer auch bei nicht vorhandener Leistungsversorgung an die Last geladen werden. Nach Einschalten der Netzversorgung arbeitet ein Konverter, bis die Spannung am Glättungskondensator der Last einen vorgegebenen Maximalwert erreicht. Hierdurch kann eine Überlastung des Glättungskondensators der Lampe vermieden werden. Der Strompfad des Konverters ist dabei vorzugsweise so ausgelegt, dass der Strom im zeitlichen Mittel mindestens so groß wie die Stärke des zur Aufrechterhaltung der Netzversorgung erforderlichen Haltestroms ist.

Nach einer Variante des Verfahrens ist vorgesehen, dass der vorgegebene Maximalwert der Spannung am Glättungskondensator reduziert wird, wenn die Zeit, in der die Netzversorgung jeweils eingeschaltet ist, einen vorgegebenen Minimalwert unterschreitet. Dies hat insbesondere beim Betrieb mit Phasenanschnittsdimmern den Vorteil, dass bei sehr großen Phasenanschnittwinkeln Blindströme und Verluste in den stromführenden Bauelementen reduziert werden können.

Das erfindungsgemäße Verfahren erkennt vorzugsweise in einem weiteren Schritt, ob die Last an einem Dimmer betrieben wird oder eine kontinuierliche Netzversorgung aufweist. Kontinuierlich heißt, dass die Wechselspannung dauerhaft und stetig am Eingang der Last angelegt ist. Hierzu wird der Strompfad dauerhaft ausgeschaltet, d. h. der Konverterbetrieb wird deaktiviert.

Das erfindungsgemäße Verfahren wird durch eine erfindungsgemäße Schaltung durchgeführt. Diese weist mindestens einen ein- und ausschaltbaren Strompfad auf, der die Eingänge der Last für überbrückt. Somit kann erfindungsgemäß z. B. im Falle eines Dimmerbetriebs das Aufladen des Dimmerzeitglieds auch bei nicht geschaltetem Leistungsschalter (Triac im Dimmer) ermöglicht werden. Weiter ist ein Steuerelement vorgesehen, das dafür sorgt, dass die Spannung über dem kapazitiven Eingang der Last erfasst und der Strompfad entsprechend ein- und ausgeschaltet wird. Die Erfassung erfolgt bevorzugt dadurch, dass auf der Netzseite der Last vor einem Gleichrichter über drei Widerstände ein Abbild der Netzspannung erzeugt wird.

Weiter kann die Schaltung ein Signal der Netzversorgung auswerten und auf der Grundlage dieses Signals ein Steuersignal erzeugen, das die Leistungsaufnahme der Last steuert. Dadurch kann der Lastbetrieb der variablen Netzversorgung angepasst werden.

Bei der vorliegenden Erfindung ist die bevorzugte Form des Konverters ein Hochsetzsteller. Der Strompfad in der Schaltung wird vorzugsweise durch einen durch das Steuerelement ansteuerbaren Transistor gebildet. Der Hochsetzsteller arbeitet erfindungsgemäß nach Anlegen der Netzversorgung an die Last, bis die Spannung am Glättungskondensator der Last einen vorgegebenen Maximalwert erreicht. Hierdurch können Überspannungen am Glättungskondensator der Last verhindert und die Lebensdauer der Lampe insgesamt positiv beeinflusst werden. Zur weiteren Reduzierung von störenden Einflüssen (z. B. der Drossel des Dimmers) ist vorgesehen, die Eingänge der Last vor dem Konverter kurzzuschließen und so den Konverter zu umgehen. Dies erfolgt erfindungsgemäß durch eine Schnittstellenschaltung die zwischen Gleichrichter und den Konverter geschaltet wird und die einen Kurzschluss erzeugt, solange keine netzseitige Leistungsversorgung an die Last erfolgt. Die Schnittstellenschaltung ist dabei vorzugsweise über eine Entkopplungsdiode vom Konverter entkoppelt, so dass vom Konverter aus keine Entladungsvorgänge über die Schnittstellenschaltung stattfinden können.

### Kurze Beschreibung der Zeichnungen

Im Folgenden soll die Erfindung anhand mehrerer Ausführungsbeispiele näher erläutert werden. Es zeigen:
- Figur 1: eine Schaltungsanordnung für den Betrieb einer Last an einem Phasenanschnittsdimmer;
- Figur 2: ein Beispiel für eine Schaltungsanordnung zur Realisierung des erfindungsgemäßen Verfahrens;
- Figur 3: ein Diagramm, das a) den qualitativen Verlauf der durch den Phasenanschnittsdimmer bereitgestellten Netzspannung, b) den qualitativen Verlauf der Spannung über dem der Last und c) den Verlauf des Spannungssignals am Steuereingang des im Hochsetzsteller als Schalter betriebenen Transistors als Funktion der Zeit zeigt;
- Figur 4: ein weiteres Diagramm, das ähnliche zeitliche Verläufe der in Figur 3 genannten Größen zeigt;
- Figur 5a: eine beispielhafte Schaltung zur Implementierung des erfindungsgemäßen Verfahrens;
- Figur 5b: eine weitere beispielhafte Schaltung zur Implementierung des erfindungsgemäßen Verfahrens;
- Figur 6: ein Diagramm, das den Verlauf einer zur Regelung der Leistungsaufnahme der Last verwendeten Ausgangsspannung als Funktion des im Phasenanschnittsdimmer eingestellten Phasenanschnittswinkels zeigt;
- Figur 7: einen Schaltplan für eine erfindungsgemäße Schaltung mit integrierter Schnittstellenschaltung.

### Bevorzugte Ausführung der Erfindung

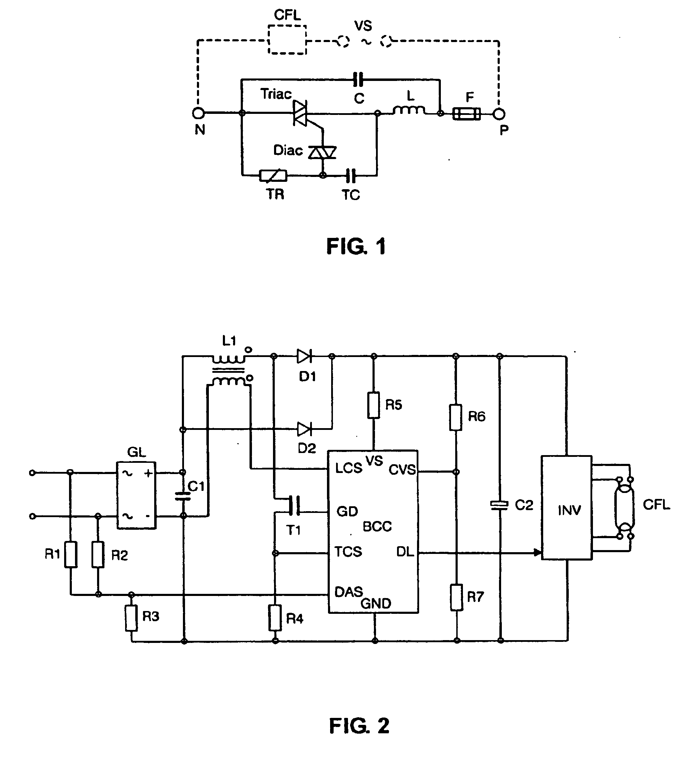

Ein Beispiel für die Schaltungsanordnung für den Betrieb einer Last an einem Phasenanschnittsdimmer ist in Fig. 1 gezeigt. Zu sehen ist eine Schaltung, in der eine Last CFL von einer Wechselspannung/Netzversorgung VS betrieben wird. Die Last CFL wird von dieser Spannungsquelle VS über einen Phasenanschnittsdimmer (zwischen den Punkten N und P) versorgt. Phasenanschnittsdimmer liefern eine periodische Netzversorgung an die Last, die in jeder Halbperiode zeitverzögert durch Zünden eines Leistungsschalters Triac über ein variables Zeitglied Diac, TR, TC freigeschaltet wird. Neben dem Leistungsschalter Triac und dem Zeitglied, das aus einem Diac, einem Kondensator TC und einem regelbaren Widerstand TR gebildet wird, sind in der Dimmerschaltung üblicherweise noch eine Sicherung F und zur Funkentstörung außerdem ein Kondensator C und eine Induktivität L vorgesehen.

Das erfindungsgemäße Verfahren basiert auf der schaltungstechnischen Anordnung eines Hochsetzstellers, der in der Figur 2 als Teil des integrierten Vorschaltgeräts einer Kompakt-Leuchtstofflampe CFL durch den Kondensator C1, den Kondensator C2, die Diode D1, die Drossel L1 und den durch einen Transistor T1 realisierten Schalter gebildet wird. Die Kompakt-Leuchtstofflampe enthält einen Gleichrichter GL, über den der Kondensator C2 (d. h. den kapazitiven Eingang der Last) über die Drossel L1 geladen wird. Der Kondensator C2 versorgt eine Lampe CFL über eine eingangs erwähnte Inverterschaltung INV. Mit einer Steuerschaltung BCC erfolgt die Versorgung des Kondensators C2 über den Transistor T1 durch Ansteuern des Ausgangs GD.

Die Schaltung arbeitet wie folgt: Die Netzwechselspannung wird in dem Gleichrichter GL in eine pulsierende Gleichspannung umgewandelt. In die positive Zuleitung ist seriell die Primärwicklung einer Drossel L1 mit einer zusätzlichen Sekundärwicklung geschaltet. Die Sekundärwicklung kann für die Erkennung der Abmagnetisierung der Drossel L1 verwendet werden.

Der Transistor T1 sorgt im eingeschalteten Zustand für einen ansteigenden Stromfluss in der Drossel L1 bis zu einem einstellbaren Wert, der mit einem Widerstand R4, der in Serie zum Transistor geschaltet ist, gemessen wird. Der Strom durch T1 wird von der Steuerschaltung BCC als Spannungsabfall an R4 über den Eingang TCS erfasst und weiterverarbeitet.

Eine Diode D1 leitet nach dem Ausschalten des Transistors T1 den in der Drossel L1 eingeprägten Strom in einen Kondensator C2, bis die Drossel vollkommen abmagnetisiert ist. Dieses Abmagnetisieren wird durch die Sekundärwicklung auf L1, die mit dem Eingang LCS der Steuerschaltung BCC verbunden ist, detektiert.

Die im folgenden näher beschriebene Steuerschaltung BCC steuert gemäß der vorliegenden Erfindung über den Ausgang GD das Ein- und Ausschalten des Transistors T1. Diese Steuerschaltung wird beispielsweise über den Widerstand R5 mit Energie versorgt, selbstverständlich können auch andere Schaltungen zur Bereitstellung einer ausreichenden Versorgungsspannung für die Steuerschaltung BCC verwendet werden.

Mit Widerständen R6 und R7 wird die Spannung an dem Kondensator C2 erfasst und, entsprechend dem Verhältnis R6/R7 heruntergeteilt, an den Eingang CVS der Steuerschaltung BCC gelegt.

Die Widerstände R1, R2 und R3 sind so geschaltet, dass der Steuerschaltung BCC am Eingang DAS zur Erfassung eines Phasenanschnittwinkels der versorgenden Netzspannung ein Abbild der momentan angelegten Netzspannung zur Verfügung gestellt werden kann.

An der Ausgangsseite des Gleichrichters können die Nulldurchgänge der Netzspannung aufgrund eventueller Restspannungen an Filterkondensatoren (C1) oder parasitären Kapazitäten (z.B. in GL) nicht sicher detektiert werden. Durch den Anschluss der beiden Widerstände R1 und R2 an die Netzseite des Gleichrichters kann die angelegte Eingangsspannung, insbesondere ihre Nulldurchgänge, unabhängig von Sieb- oder Funkentstörkondensatoren erfasst werden.

Über den Ausgang DL stellt die Steuerschaltung BCC ein Signal zur Verfügung, dessen Größe proportional zu einem Phasenanschnittwinkel einer durch einen externen Dimmer erzeugten und über R1, R2 und R3 bzw. den Eingang DAS erfassten, angeschnittenen Netzspannung ist. Dieses Signal kann in einem geeigneten, hier nicht näher beschriebenen Inverter zur Steuerung bzw. Regelung des Lampenstroms und damit der Lampenhelligkeit in Abhängigkeit von einem im Dimmer eingestellten Phasenanschnittwinkel verwendet werden.

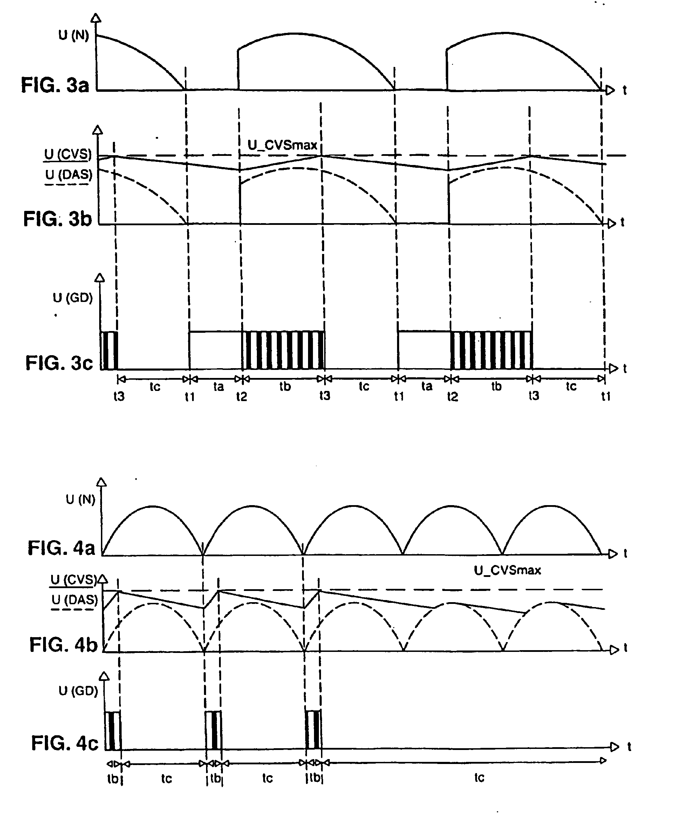

Zur Erläuterung der weiteren Funktionsweise der Schaltung wird auf Figur 3 Bezug genommen. Gezeigt sind die zeitlichen Verläufe der durch den Phasenanschnittsdimmer bereitgestellten Netzspannung U(N) am Widerstand R3 (proportional zu U(N)), der Spannung am Widerstand R7 (proportional zu U(C2)), bzw. der Spannung U(DAS) am Eingang DAS, die die Netzspannung abbildet, sowie der zum Ansteuern des Transistors T1 am Ausgang GD anliegende Spannung U(GD).

Am Ende einer Netzhalbwelle wird die Spannung am Eingang DAS der Steuerschaltung BCC zu Null (Zeitpunkt t1). Darauf hin schaltet BCC über den Ausgang GD den Transistor T1 ein. In der Phase ta, in der durch den Transistor und damit durch den Widerstand R4 kein Laststrom fließt, weil der im netzseitig vorhandenen Dimmer enthaltene Triac (vgl. Figur 1) noch nicht eingeschaltet wurde (Phasenanschnitt), bleibt der Transistor T1 dauerhaft eingeschaltet.

Durch den eingeschalteten Transistor erscheint die dimmbare, erfindungsgemäße Lampe dem Dimmer als niederohmige Last wie z. B. eine Glühlampe (CFL in Figur 1). Über den Strompfad GL, L1, T1 und R4 kann der Kondensator TC des im Dimmer vorhandenen Zeitglieds (gebildet durch TR und TC, Figur 1) über den einstellbaren Widerstand TR des Zeitglieds des Dimmers geladen werden, bis der Triac mit dem Diac gezündet wird, obwohl die Lampe in der Phase ta selbst keine Energie (Ladestrom für den Siebkondensator) aufnimmt. Während ta fließt also nur der kleine Strom, der für die Funktion des Zeitglieds (TR, TC) im Dimmer erforderlich ist. Über dem Dimmer (Spannung P-N) steht praktisch die gesamte Netzspannung VS quasi als Sperrspannung.

In dem Augenblick, in dem der Triac im Dimmer gezündet wird (Zeitpunkt t2), kann durch den Dimmer ein Strom fließen und am Eingang der dimmbaren CFL liegt die Netzspannung an, die Spannung über dem Dimmer (P-N) wird fast zu Null. Die physikalischen Eigenschaften des Triacs erfordern das Fließen eines minimalen Stroms (sog. Haltestrom), um das Bauteil ohne weitere Zündimpulse in einem leitenden Zustand zu halten. Würde dieser Haltestrom unterschritten, würde der Triac wieder verlöschen und es könnte bei entsprechender Einstellung des internen Zeitglieds des Dimmers über den Diac ein erneuter Zündimpuls an den Steuereingang des Triacs geleitet werden, wodurch ein erneuter Stromfluss möglich wäre. Dieses mehrmalige Zünden des Triacs innerhalb einer Netzhalbwelle führt zu deutlich sichtbarem Flackern der Lampe, vor allem wenn die oben beschriebene Wiederholungszündung nur in jeder zweiten Netzhalbwelle stattfindet.

Erfindungsgemäß beginnt die vorgeschlagene Schaltungsanordnung zum Zeitpunkt t2 wie ein bekannter Hochsetzsteller zu arbeiten. Die Bauteile L1, T1 und R4 sind dabei so dimensioniert, dass der mittlere von der dimmbaren CFL aufgenommene Strom in der Zeit tb größer als der Haltestrom aller üblicherweise in Dimmern verwendeten Triacs ist. Ein Verlöschen des Triacs im Dimmer ist dadurch ausgeschlossen. In dieser Zeit tb wird durch den Betrieb der Schaltungsanordnung als Hochsetzsteller der Glättungskondensator C2 geladen, die Spannung U_C2 über C2 steigt linear an.

Zum Zeitpunkt t3 erreicht die am Spannungsteiler R6/R7 abgreifbare Spannung U (CVS) einen vorgebbaren Maximalwert U_CVSmax. Dieser Maximalwert U_CVSmax ergibt sich aus der Spannungsbelastbarkeit des Kondensators C2, der Spannungsfestigkeit der im Inverter enthaltenen Schaltelemente, einem Teilerverhältnis R6/R7, der Schaltschwelle UDC4bzw. USUB sowie dem Signal DL.

Zu diesem Zeitpunkt t3 wird erfindungsgemäß der Betrieb der Schaltungsanordnung im Sinne eines Hochsetzstellers beendet, der Transistor T1 bleibt dauerhaft ausgeschaltet bis zum nächsten Nulldurchgang der Netzspannung, bei dem ein neuer Zyklus beginnt. In dieser Phase tc verlöscht der Triac des Dimmers, was aber auf den Betrieb der CFL keine Auswirkung mehr hat, da ihr Glättungskondensator C2 auf eine ausreichende Spannung aufgeladen wurde und die Inverteranordnung INV bzw. die Lampe CFL mit Energie versorgen kann.

Durch den Hochsetzstellerbetrieb wird der Siebkondensator in jeder Netzhalbwelle auf den gleichen Wert aufgeladen, auch wenn im Dimmer Unsymmetrien (gering unterschiedliche Anschnittwinkel bei positiver und negativer Halbwelle) auftreten. Flackererscheinungen mit einer Frequenz der Netzspannung können dadurch erfindungsgemäß nicht auftreten.

Die Erfindung lässt sich auch noch dann anwenden, wenn die Last ohne Dimmer betrieben wird. Bei den herkömmlichen Schaltungen können in diesem Fall die gesetzlichen Vorschriften bezüglich Netzstromoberschwingungen nicht eingehalten werden. Der Hochsetzstellerbetrieb würde nämlich sofort nach jedem Netznulldurchgang beginnen (keine Phase ta). Die Phase tb wäre dann so früh beendet, dass bei einem Phasenwinkel von 90° kein Strom mehr in die Lampe fließen würde. In einer entsprechenden Norm EN61000-3-2 ist jedoch ein Stromfluss über 90° hinaus vorgeschrieben.

Die erfindungsgemäße Steuerschaltung BCC erkennt, ob ein Dimmer vorhanden ist oder ob die Lampe direkt am Netz betrieben wird. Figur 4 verdeutlicht schematisch den Übergang in einen Betrieb der Lampe mit deaktiviertem Hochsetzsteller, wenn kein Dimmer vorhanden ist.

Wenn kein Dimmer vorhanden ist, wird der Transistor T1 erfindungsgemäß nach wenigen Netzhalbwellen dauerhaft nicht mehr eingeschaltet (nur noch die Phase tc wird ausgeführt), weshalb ein direkter Nachladestrom über die Diode D2 aus dem Netz in den Kondensator C2 fließt. Die Dimensionierung des Kondensators muss bzgl. der Einhaltung der oben genannten Norm in gleicher Weise erfolgen wie bei den heute verfügbaren, nicht dimmbaren Lampen.

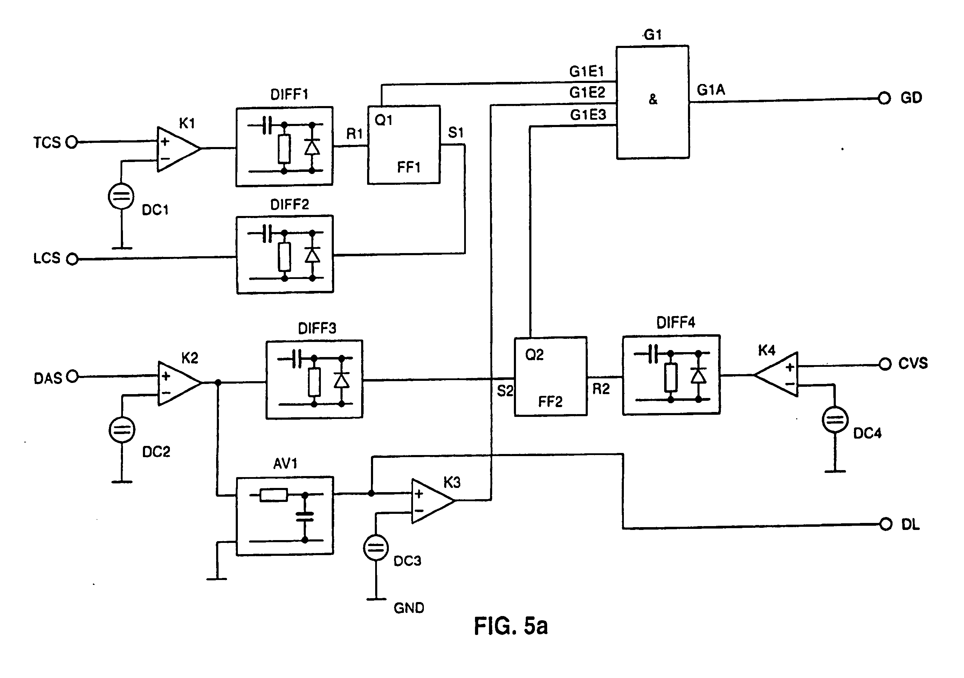

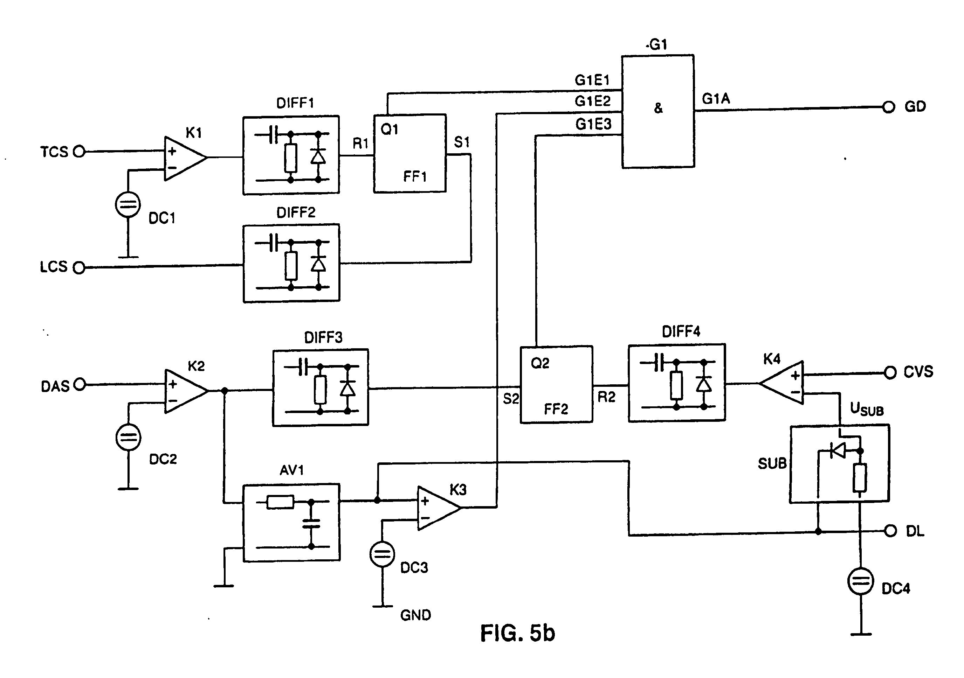

In Figur 5 ist ein Beispiel für die eine Schaltungsanordnung zu sehen, die das erfindungsgemäße Verfahren umsetzt und wie folgt funktioniert.

Zu Beginn des Betriebs werden die Speicherglieder (Flip-Flops) FF1 und FF2 gesetzt, so dass ihre Ausgänge Q1 und Q2 logisch "Eins" sind. Der Ausgang des Komparators K3 ist zu Anfang ebenfalls logisch "Eins", da der in AV1 enthaltene Kondensator noch nicht geladen wurde und somit am Ausgang des Tiefpasses AV1 noch keine Spannung zur Verfügung steht.

Durch diese Vorbedingungen (G1E1=G1E2=G1E3="Eins") wird der Ausgang G1A des Und-Gatters G1 logisch "eins", der Ausgang GD der Steuerschaltung ist damit ebenfalls "Eins" und der Transistor T1 ist eingeschaltet.

Durch den beginnenden Stromfluss durch GL, L1, T1 und R4 steigt nun die Spannung am Eingang TCS, und damit am positiven Eingang eines Komparators K1. Sobald nun die Spannung an TCS die vorgebbare Spannung DC1 am negativen Eingang von K1 übersteigt, steigt die Ausgangsspannung von K1 schlagartig an. Durch einen Differenzierer DIFF1 wird dieser Anstieg in einen kurzen Puls umgeformt, der das Flip-Flop FF1 über dessen Eingang R1 zurücksetzt, der Ausgang Q1 wird zu "Null". Dies führt über den Eingang G1E1 des Und-Gatters G1 zu einem Abschalten des Transistors T1, da GD ebenfalls "Null" wird. Alternativ ist es möglich, den Transistor T1 für eine vorgegebene Zeit einzuschalten. Statt des Komparators kann hierfür eine entsprechende Zeitschaltung vorgesehen sein.

Das Abmagnetisieren der Drossel L1 wird über die Sekundärwicklung auf L1 detektiert. Das an dieser Sekundärwicklung erzeugte Signal wird über den Eingang LCS einem Differenzierer DIFF2 zugeführt, an dessen Ausgang in dem Augenblick, in dem der Strom in L1 zu Null wird, ein kurzer Puls bereitgestellt wird. Dieser kurze Puls setzt über den Eingang S1 das Flip-Flop FF1 (Q1 geht auf "Eins"), was über G1 und GD zu einem erneuten Einschalten des Transistors T1 führt.

Erfindungsgemäß kann dieser oben beschriebene Betrieb der Schaltungstopologie als Hochsetzsteller über die beiden Eingänge G1E2 und G1E3 des Und-Gatters G1 so beeinflusst werden, dass das vorgeschlagene Verfahren ausgeführt werden kann.

Zu Anfang des Betriebs ist der Ausgang Q2 des Flip-Flops FF2 auf "Eins". Durch den oben beschriebenen Betrieb der Schaltungstopologie als Hochsetzsteller (Phase tb) steigt die Spannung am Glättungskondensator C2 und damit am Eingang CVS der Steuerschaltung an.

Übersteigt die Spannung an CVS einen vorgebbaren Wert DC4, schaltet der Ausgang des Komparators K4 von "Null" auf "Eins". Dieser Zustandswechsel wird durch den Differenzierer DIFF4 in einen kurzen Puls umgewandelt, der über den Eingang R2 das Flip-Flop FF2 zurücksetzt. Dadurch wird Q2 zu "Null", der Ausgang des Und-Gatters G1 wird durch G1E3=0 ebenfalls zu "Null". Über G1E3 und G1A bleibt der Transistor T1 sicher ausgeschaltet(Phase tc), bis das Flip-Flop FF2 wieder gesetzt wird (Zeitpunkt t1).

Wird die Spannung am Eingang DAS (die proportional zur Spannung am Eingang der CFL ist) am Ende einer Netzhalbwelle kleiner als eine einstellbare Schwellspannung DC2, schaltet der Ausgang des Komparators K2 von "Eins" auf "Null". Dieser Zustandswechsel wird durch den Differenzierer DIFF3 in einen kurzen Puls umgewandelt, der über den Eingang S2 das Flip-Flop FF2 setzt. Dadurch wird Q2 zu "Eins", der Ausgang des Und-Gatters G1 kann bei entsprechenden Eingangsspannungen an G1E1 und G1E2 wieder zu "Eins" werden. Die in Phase tc erforderliche Sperrung des Gatters G1 über G1 E3 durch den Ausgang Q2 ist aufgehoben.

Das Ausgangssignal des Komparators K2 wird zusätzlich einem Tiefpass AV1 zugeführt, dessen Ausgangsspannung damit proportional dem im Dimmer eingestellten Phasenanschnittwinkel ist. Das geglättete Signal am Ausgang des Tiefpasses AV1 wird am Ausgang DL der Steuerschaltung für den Inverter INV zum Erreichen eines gewünschten Lichtstroms bereitgestellt.

Mit dem Komparator K3 wird detektiert, ob die CFL an einem Dimmer betrieben wird. Die Spannung am Ausgang des Tiefpasses AV1 ist maximal, wenn die volle Netzspannung an der CFL anliegt. In diesem Fall ist die Ausgangsspannung von AV1 größer als eine vorgebbare Schwellspannung DC3, der Ausgang des Komparators ist deshalb "Null". Da das Ausgangssignal von K3 an den Eingang G1E2 des Und-Gatters G1 gelegt ist, ist dessen Ausgang G1A sicher "Null", der Transistor T1 kann über G1 bzw. GD nicht eingeschaltet werden.

Jeder Dimmer hat einen Mindest-Phasenanschnittwinkel, auch wenn er auf 100% Helligkeit eingestellt wird. Dadurch sinkt die Ausgangsspannung von AV1 unter den vorgebbaren Wert DC3, wodurch der Ausgang von K3 "Eins" ist. In diesem Zustand ist die Sperrung des Gatters G1 über G1E2 durch den Ausgang von K3 aufgehoben, wenn die CFL an einem Dimmer betrieben wird.

Zur weiteren Verbesserung des bereits beschriebenen Verfahrens zum Dimmen von CFL kann vorgesehen sein, dass der vorgebbare Maximalwert U_CVSmax für die Spannung an C2 bei Phasenanschnittwinkeln größer einem ebenfalls vorgebbaren Wert langsam verkleinert wird. Dabei muss berücksichtigt werden, dass ein direktes Nachladen von C2 über die Diode D2 aus dem Netz sicher vermieden wird. In jedem möglichen Betriebszustand muss die Spannung an C2 größer als der Momentanwert der Netzspannung sein.

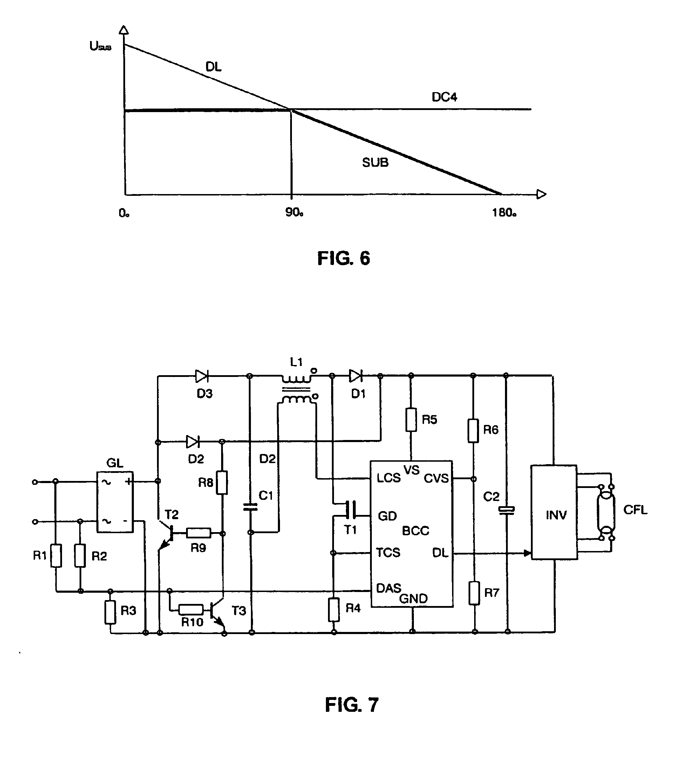

Eine entsprechende beispielhafte Schaltungsanordnung für die Steuerschaltung ist in Figur 5b gezeigt. In Abweichung von der bisherigen Ausführung unter Bezugnahme auf Figur 5a wird dem Komparator K4 keine konstante Vergleichsgröße DC4 zugeführt, sondern eine vom Phasenanschnittwinkel abhängige Spannung (vgl. Figur 6).

In einem Subtrahierer SUB wird von dem durch DC4 vorgegebenen Maximalwert für die Spannung über C2 bei Phasenanschnittwinkeln größer einem vorgebbaren Wert ein vom eingestellten Anschnittwinkel abhängiger Wert subtrahiert. Dazu kann das Signal DL verwendet werden, da die Ausgangsspannung von AV1 zu steigenden Anschnittwinkeln hin sinkt.

Figur 6 zeigt beispielhaft die Ausgangsspannung des Subtrahierers SUB in Abhängigkeit des Phasenanschnittwinkels, wenn die Spannung an C2 bei Phasenanschnittwinkeln größer 90° reduziert wird.

Die Festlegung, ab welchem Anschnittwinkel der dem Komparator K4 zugeführte Referenzwert U(SUB) für die maximale Spannung U_CVSmax reduziert wird, kann durch Variation der Spannung DC4 und U(DL) erfolgen. Durch das Verhältnis R6/R7 kann dann die tatsächliche Maximalspannung an C2 eingestellt werden. Wenn beispielsweise das Signal DC4 verkleinert wird, wird erst bei Phasenanschnittwinkeln von größer 90° die Spannung U(SUB) reduziert.

Die oben beschriebene Schaltungsanordnung ist nur als Beispiel für die technische Realisierung des vorgeschlagenen Verfahrens zu sehen. Es können auch andere Schaltungen verwendet werden, mit denen das beschriebene Verfahren angewendet werden kann.

Erfindungsgemäß kann das Zeitglied auch im nicht leitenden Zustand des Leistungsschalters im Dimmer (wenn also keine Netzspannung an die Last gelegt wird) arbeiten. Das bedeutet, die eigentliche Last ist bei nicht vorhandener Leistungsversorgung für das Zeitglied nicht vorhanden. Die erfindungsgemäße Schaltungsanordnung in der Last stellt dann einen niederohmigen Strompfad dar. Der Zündvorgang des Leistungsschalter im Dimmer wird nur durch den Zeitwiderstand TR und den Zeitkondensator TC (vgl. Figur 1) definiert. So kann vermieden werden, dass etwa Phasenverschiebungen auftreten, die die Zündzeitpunkte in aufeinander folgenden Netzhalbwellen verschieben und bei der Last letztlich zu unerwünschten Flackererscheinungen führen können.

Erfindungsgemäß kann dem Hochsetzsteller eine (separate) Schnittstellenschaltung vorausgeschaltet sein. Die Schnittstellenschaltung ist so ausgelegt, dass sie den Transistor T1 und die Drossel L1 in der Phase ta überbrückt, so dass die Last im Bezug auf die Netzanschlüsse kurzgeschlossen wird. Dies hat den Vorteil, dass bei nicht gezündetem Triac der Strompfad zur Aufladung des Zeitglieds im Dimmer nicht über die Drossel L1 sowie den Transistor T1 und den Widerstand R4 führt, so dass Störungen durch die Last oder deren elektronisches Vorschaltgerät, die ansonsten zu den unerwünschten Flackererscheinungen führen, vermieden werden können.

Ein Beispiel für den Einsatz einer solchen Schnittstellenschaltung ist in Figur 7 gezeigt.

Die erfindungsgemäße Schnittstellenschaltung wird im in Figur 7 gezeigten Beispiel durch die Widerstände R1, R2, R3, die Diode D3, die Widerstände R8, R9, R10 und die Transistoren T2 und T3 gebildet. Die Schaltstrecke des Transistors T2 verläuft in Serie mit der Entkopplungsdiode D3 parallel zum Glättungskondensator C1. Der Transistor T2 schließt die Versorgungseingänge der Last kurz. Ein zweiter Transistor T3 dient zum Ein- bzw. Ausschalten des Transistors T2 und ist mit seinem Kollektor (über einen Widerstand R9) mit der Basis des Transistors T2 verbunden. Die Schaltstrecke des zweiten Transistors T3 verläuft dabei parallel zur Serienschaltung aus dem Widerstand R9 und der Steuerstrecke des ersten Transistors T2 (T3 schaltet also T2 aus und ein). So kann der erste Transistor ausgeschaltet werden, indem der andere Transistor eingeschaltet wird.

Die Funktionsweise der Schaltung ist die Folgende: Der Transistor T2 wird erfindungsgemäß nur in der Phase ta eingeschaltet und bildet im eingeschalteten Zustand über den Brückengleichrichter GL einen Kurzschluss zwischen den beiden Netzeingangsanschlüssen. Die Polung der Diode D3 verhindert, dass der Transistor T2 im eingeschalteten Zustand auch den Kondensator C1 kurzschließt. Durch die Anordnung des Transistors T2 am Ausgang des Brückengleichrichters GL wird erreicht, dass die Eingangsimpedanz der Last (CFL) sowohl bei positiven als auch bei negativen Halbwellen der Netzwechselspannung (VS, siehe Figur 1) auf ein Minimum ("Kurzschluss") reduziert ist.

Mit den Widerständen R1, R2 und R3 wird ein Abbild der momentanen Eingangsspannung der Schaltung gebildet und über den Widerstand R10 an die Basis des Transistors T3 angelegt.

Die Anordnung der Widerstände R1 und R2, die erfindungsgemäß netzseitig angeschlossen sind, stellt sicher, dass die Nulldurchgänge der Netzeingangsspannung (Umkehrung der Polarität) sicher und unabhängig von eventuell vorhandenen Filterkapazitäten oder auch parasitären Kapazitäten detektiert werden können.

Der Transistor T2 wird bei ausgeschaltetem Transistor T3 über die Widerstände R9 und R8 eingeschaltet. Wenn T3 durch einen positiven, ausreichend großen Spannungsabfall an R3 über R10 eingeschaltet wird, wird der Transistor T2 ausgeschaltet (Zeitpunkt t2 in Figur 3). Die Widerstände R10 und R9 dienen dabei der Verbesserung des Schaltverhaltens von T3 und T2.

Durch die invertierende Funktion von T3 wird erreicht, dass T2 immer während der Zeit ta (vgl. Fig. 3) eingeschaltet ist, in der der Momentanwert der Netzwechselspannung VS über dem Dimmer ansteht und der im Dimmer als Schaltelement vorgesehene Triac nicht leitend ist. Sobald der Triac im Dimmer gezündet wird (Zeitpunkt t2 in Figur 3) und dadurch der Momentanwert der Netzwechselspannung VS an die Last CFL gelegt wird, wird T2 ausgeschaltet und der Kondensator C1 wird über D3 auf den Spitzenwert der Eingangsspannung der Last CFL aufgeladen.

## Patentansprüche

1. Verfahren zum Variieren der Leistungsaufnahme von kapazitiven Lasten (INV, CFL) an einem Wechselspannungsnetz, dessen Netzspannung in jeder Netzhalbwelle Ein- und Ausgeschaltet wird, **dadurch gekennzeichnet, dass**
a) solange die Netzspannung in der Netzhalbwelle ausgeschaltet ist (tₐ), ein die Lasteingänge überbrückender Strompfad freigeschaltet wird, und dass
b) bei in der Netzhalbwelle eingeschalteter Netzspannung über einen Konverter ein Glättungskondensator (C2) geladen wird (t_{b}), bis die Spannung am Glättungskondensator (C2) der Last einen vorgegebenen Maximalwert (U_C2max) erreicht.

2. Verfahren nach Anspruch 1, **dadurch gekennzeichnet, dass** es sich bei dem Konverter um einen Hochsetzsteller (L1, T1, R4, D1, D2) handelt.

3. Verfahren nach Anspruch 1 oder 2, **dadurch gekennzeichnet, dass** der Maximalwert (U_C2max) der Spannung am Glättungskondensator (C2) reduziert wird, wenn die Zeit, in der die Netzspannung in der Netzhalbwelle jeweils eingeschaltet ist, einen vorgegebenen Minimalwert unterschreitet.

4. Verfahren nach Anspruch 1, 2 oder 3, **dadurch gekennzeichnet, dass** bei einer an die Last angelegten Netzspannung, die nicht in jeder Netzhalbwelle Ein- und Ausgeschaltet wird, der Konverter dauerhaft deaktiviert wird.

5. Schaltung ausgelegt zur Durchführung des Verfahrens nach einem der Ansprüche 1 bis 4, **dadurch gekennzeichnet, dass** sie einen ein- und ausschaltbaren Strompfad (L1, T1, R4) aufweist, der ausgelegt ist, die Eingänge einer Last (INV, CFL) zu überbrücken, und dass ein Steuerelement (BCC) vorgesehen ist, das ausgelegt ist, die Spannung über dem Glättungskondensator (C2) einer Last (INV, CFL) und deren im Takt mit der Netzfrequenz in jeder Netzhalbwelle Ein- und Ausgeschalten Netzspannung zu detektieren und den Strompfad (T1, R4) ein- und auszuschalten.

6. Schaltung nach Anspruch 5, **dadurch gekennzeichnet, dass** sie über einen ersten und einen zweiten Widerstand (R1, R2) mit jeweils einem netzseitigen Eingang eines Gleichrichters (GL) verbunden ist.

7. Schaltung nach einem der Ansprüche 5 oder 6, **dadurch gekennzeichnet, dass** sie ausgelegt ist, ein von der Netzversorgung erzeugtes Signal auszuwerten und ein Signal (DL) zur Steuerung der Leistungsaufnahme der Last (INV, CFL) zu erzeugen.

8. Schaltung nach einem der Ansprüche 5 bis 6, **dadurch gekennzeichnet, dass** sie einen Hochsetzsteller (L1, T1, R4, D1, C2) aufweist, wobei der Strompfad (T1, R4) über die Drossel (L1) des Hochsetzstellers (L1, T1, R4, D1, C2) und einen mit dem Steuerelement (BCC) ansteuerbaren Transistor (T1) des Hochsetzstellers (L1, T1, R4, D1, C2) führt und der Hochsetzsteller dazu ausgelegt ist, nach Anlegen der Netzversorgung an die Last solange zu arbeiten, bis die Spannung am Glättungskondensator (C2) der Last (INV, CFL) einen vorgegebenen Maximalwert (U_C2max) erreicht.

9. Schaltung nach einem der Ansprüche 5 bis 8, **dadurch gekennzeichnet, dass** sie eine vorgeschaltete Schnittstellenschaltung aufweist, die ausgelegt ist, die Eingänge der Last vor dem Strompfad (T1, R4) und der Drossel (L1) kurzzuschließen und so den Strompfad (T1, R4) und die Drossel (L1) zu umgehen, solange keine Leistungsversorgung an die Last (INV, CFL) erfolgt.

10. Schaltung nach einem der Ansprüche 4 bis 9, **dadurch gekennzeichnet, dass** der Strompfad (T1, R4) so ausgelegt ist, dass er während des Betriebs des Hochsetzstellers (L1, T1, R4, D1, D2) im zeitlichen Mittel einen Strom führt, der mindestens einem zur Aufrechterhaltung des eingeschalteten Zustands eines in der Netzversorgung vorhandenen Triacs (Triac) erforderlichen Haltestrom entspricht.

11. Elektrisches Vorschaltgerät für eine Lampe mit einer Steuerschaltung nach einem der Ansprüche 4 bis 9 zum Betrieb an einem Phasenanschnittsdimmer.

## Claims

1. Method for varying the power consumption of capacitive loads (INV, CFL) on an AC voltage power supply system whose system voltage is connected and disconnected in each system half-cycle, **characterized in that**
a) as long as the system voltage is disconnected in the system half-cycle (tₐ), a current path bridging the load inputs is isolated, and **in that**,
b) when the system voltage is connected in the system half-cycle, a smoothing capacitor (C2) is charged (t_{b}) by means of a converter until the voltage across the smoothing capacitor (C2) of the load reaches a predetermined maximum value (U_C2max).

2. Method according to Claim 1, **characterized in that** the converter is a step-up converter (L1, T1, R4, D1, D2).

3. Method according to Claim 1 or 2, **characterized in that** the maximum value (U_C2max) of the voltage across the smoothing capacitor (C2) is reduced when the time at which the system voltage is in each case connected in the system half-cycle falls below a predetermined minimum value.

4. Method according to Claim 1, 2 or 3, **characterized in that**, in the case of a system voltage applied to the load which is not connected and disconnected in each system half-cycle, the converter is permanently deactivated.

5. Circuit designed for carrying out the method according to one of Claims 1 to 4, **characterized in that** it has a current path (L1, T1, R4) which can be connected and disconnected and which is designed to bridge the inputs of a load (INV, CFL), and **in that** a control element (BCC) is provided which is designed to detect the voltage across the smoothing capacitor (C2) of a load (INV, CFL) and its system voltage, which is connected and disconnected in each system half-cycle in clock with the system frequency, and to connect and disconnect the current path (T1, R4).

6. Circuit according to Claim 5, **characterized in that** it is connected to in each case one system-side input of a rectifier (GL) via a first and a second resistor (R1, R2).

7. Circuit according to either of Claims 5 and 6, **characterized in that** it is designed to evaluate a signal produced by the system power supply and to produce a signal (DL) for controlling the power consumption of the load (INV, CFL).

8. Circuit according to one of Claims 5 to 6, **characterized in that** it has a step-up converter (L1, T1, R4, D1, C2), the current path (T1, R4) being guided via the inductor (L1) of the step-up converter (L1, T1, R4, D1, C2) and a transistor (T1) of the step-up converter (L1, T1, R4, D1, C2) which can be controlled by the control element (BCC), and the step-up converter being designed to operate, once the system power supply has been applied to the load, until the voltage across the smoothing capacitor (C2) of the load (INV, CFL) reaches a predetermined maximum value (U_C2max).

9. Circuit according to one of Claims 5 to 8, **characterized in that** it has an interface circuit connected upstream of it which is designed to short-circuit the inputs of the load upstream of the current path (T1, R4) and the inductor (L1) and thus to bypass the current path (T1, R4) and the inductor (L1) as long as no power is being supplied to the load (INV, CFL).

10. Circuit according to one of Claims 4 to 9, **characterized in that** the current path (T1, R4) is designed such that, during operation of the step-up converter (L1, T1, R4, D1, D2), it carries on average over time a current which corresponds at least to a holding current required for maintaining the closed state of a triac present in the system power supply.

11. Electrical ballast for a lamp having a control circuit according to one of Claims 4 to 9 for operation using a phase-gating dimmer.

## Revendications

1. Procédé permettant de faire varier la consommation de puissance de charges capacitives (INV, CFL) au niveau d'un réseau à tension alternative, dont la tension de réseau dans chaque demi-onde de réseau est mise sous et hors tension, **caractérisé en ce que**
a) tant que la tension de réseau dans la demi-onde de réseau est hors tension (tₐ), un trajet de courant pontant les entrées de charge est déconnecté, et **en ce que**
b) lorsqu'une tension de réseau est mise sous tension dans la demi-onde de réseau via un convertisseur, un condensateur de filtrage (C2) est chargé (t_{b}), jusqu'à ce que la tension au niveau du condensateur de filtrage (C2) de la charge ait atteint une valeur maximale prédéterminée (U_C2max).

2. Procédé selon la revendication 1, **caractérisé en ce que** le convertisseur est un convertisseur survolteur (L1, T1, R4, D1, D2).

3. Procédé selon la revendication 1 ou 2, **caractérisé en ce que** la valeur maximale (U_C2max) de la tension au niveau du condensateur de filtrage (C2) est réduite, lorsque le temps, pendant lequel la tension de réseau dans la demi-onde de réseau est respectivement sous tension, est inférieur à une valeur minimale prédéterminée.

4. Procédé selon la revendication 1, 2 ou 3, **caractérisé en ce que** lors de l'application à la charge d'une tension de réseau, qui n'est pas mise sous tension ou hors tension dans chaque demi-onde de réseau, le convertisseur est désactivé durablement.

5. Circuit conçu pour la réalisation du procédé selon l'une des revendications 1 à 4, **caractérisé en ce qu'**il présente un trajet de courant pouvant être mis sous et hors tension (L1, T1, R4), qui est conçu pour ponter les entrées d'une charge (INV, CFL), et **en ce qu'**un élément de commande (BCC) est prévu, qui est conçu pour détecter la tension via le condensateur de filtrage (C2) d'une charge (INV, CFL) et la tension de réseau de celle-ci mise sous et hors tension rythmée avec la fréquence de réseau dans chaque demi-onde de réseau et mettre sous et hors tension le trajet de courant (T1, R4).

6. Circuit selon la revendication 5, **caractérisé en ce qu'**il est relié par le biais d'une première et d'une deuxième résistance (R1, R2) avec respectivement une entrée côté réseau d'un redresseur (GL).

7. Circuit selon l'une des revendications 5 ou 6, **caractérisé en ce qu'**il est conçu pour évaluer un signal généré par l'alimentation par le réseau et générer un signal (DL) pour la commande de la consommation de puissance de la charge (INV, CFL).

8. Circuit selon l'une des revendications 5 à 6, **caractérisé en ce qu'**il présente un convertisseur survolteur (L1, T1, R4, D1, C2), le trajet de courant (T1, R4) passant par la bobine de choc (L1) du convertisseur survolteur (L1, T1, R4, D1, C2) et un transistor (T1) du convertisseur survolteur (L1, T1, R4, D1, C2) excitable avec l'élément de commande (BCC) et le convertisseur survolteur est conçu de manière à fonctionner après l'application d'une alimentation par le réseau sur la charge jusqu'à ce que la tension au niveau du condensateur de filtrage (C2) de la charge (INV, CFL) ait atteint une valeur maximale prédéterminée (U_C2max).

9. Circuit selon l'une des revendications 5 à 8, **caractérisé en ce qu'**il présente un circuit d'interface placé en amont qui est conçu pour mettre les entrées de la charge en court-circuit avant le trajet de courant (T1, R4) et la bobine de choc (L1) et ainsi contourner le trajet de courant (T1, R4) et la bobine de choc (L1), tant qu'aucune alimentation en puissance ne se produit au niveau de la charge (INV, CFL).

10. Circuit selon l'une des revendications 4 à 9, **caractérisé en ce que** le trajet de courant (T1, R4) est conçu de sorte que pendant le fonctionnement du convertisseur survolteur (L1, T1, R4, D1, D2) il est parcouru en moyenne temporelle par un courant, qui correspond au moins à un courant de maintien nécessaire pour la conservation de l'état sous tension d'un triac (Triac) présent dans l'alimentation par le réseau.

11. Ballast électrique pour une lampe comportant un circuit de commande selon l'une des revendications 4 à 9 permettant de faire fonctionner un gradateur à commande de phase.
